## Europäisches Patentamt

## European Patent Office

## Office européen des brevets

(19)

(11) Veröffentlichungsnummer: **0 141 195**
**B1**

(12) **EUROPÄISCHE PATENTSCHRIFT**

(45) Veröffentlichungstag der Patentschrift:
**28.10.87**

(51) Int. Cl.⁴: **B 23 K 1/04**

(21) Anmeldenummer: **84110938.2**

(22) Anmeldetag: **13.09.84**

(54) Werkzeug.

(30) Priorität: **26.09.83 DE 3334815**

(43) Veröffentlichungstag der Anmeldung:
**15.05.85 Patentblatt 85/20**

(45) Bekanntmachung des Hinweises auf die Patenterteilung:
**28.10.87 Patentblatt 87/44**

(84) Benannte Vertragsstaaten:
**AT CH DE FR GB IT LI SE**

(56) Entgegenhaltungen:
**AT - B - 136 650**
**AT - B - 203 828**
**DE - C - 751 201**
**DE - C - 804 283**
**DE - C - 970 847**

(73) Patentinhaber: **S i k u GmbH Metall- und Kunststoffwarenfabrik, CH-6221 Rickenbach (CH)**

(72) Erfinder: **Bucher, Anton, Wiesengrund, CH-6221 Rickenbach (CH)**
Erfinder: **Simon, Peter, Rüchlig, Ch-6221 Rickenbach (CH)**
Erfinder: **King, Wilhelm, Schramberger Strasse 21, D-7233 Lauterbach (DE)**

(74) Vertreter: **Vogel, Georg, Hermann-Essig-Strasse 35 Postfach 105, D-7141 Schwieberdingen (DE)**

ACTORUM AG

## Beschreibung

Die Erfindung betrifft ein Werkzeug mit mindestens einem verschleissfesten, der Bearbeitung von Werkstücken, Gestein oder dgl. dienenden Hartmetallteil, das mit einem metallischen Träger durch ein in mindestens einem Lötspalt befindliches Lot mit eingebetteten Einlagen fest verbunden ist.

Werkzeuge dieser Art sind durch die DE-C 751 201, die DE-C 804 283, die DE-C 970 847, die AT-B 136 650 und die AT-B 203 828 bekannt. Die Einlagen sind dabei über ihre gesamte Oberfläche mit dem Lot fest verbunden. Damit sich die Spannungen im Lot besser ausgleichen können, sind bei den Werkzeugen nach der DE-C 751 201 und der DE-C 970 847 die Einlagen volumen-veränderlich und elastischer als das Lot. Da die Volumenänderung der Einlagen grosse Kräfte voraussetzt, werden nur grosse Spannungen im Lot teilweise ausgeglichen.

Es ist Aufgabe der Erfindung, bei einem Werkzeug der eingangs erwähnten Art unter Verwendung von üblichem Lot eine Verbindung zwischen dem Hartmetallteil und dem Träger zu schaffen, bei dem schon kleine Spannungen im Lot wesentlich besser ausgeglichen werden.

Diese Aufgabe wird nach der Erfindung zum einen dadurch gelöst, dass die Einlagen mit einer beim Löten nicht mit dem Lot verbindenden Oberflächenschicht versehen sind, und zum anderen in äquivalenter Weise dadurch, dass die Einlagen hohl ausgebildet sind, wobei der Innenraum der Einlagen nicht mit dem Lot verbunden ist. In jedem Fall entstehen im Lötspalt Unterbrechungen im Lot, über die der Spannungsausgleich in weit besserem Masse erfolgt und dies in allen Richtungen, ohne dass dazu eine wesentliche Volumenänderung der Einlagen erforderlich ist.

Weist das Lot keine eingebetteten Einlagen auf, dann lässt sich der gleiche Spannungsausgleich auch dadurch erreichen, dass nur Teilbereiche der durch das Hartmetallteil und den Träger gebildeten Lötspaltwände unter Bildung von Hohlräumen miteinander fest verbunden sind.

Vorteilhafte Weiterbildungen des Werkzeuges sind den Unteransprüchen zu entnehmen.

Der Spannungsausgleich bei im Lot eingebetteten Einlagen lässt sich nach weiteren Ausgestaltungen dadurch verbessern, dass die Einlagen volumenveränderlich und elastischer als das Lot sind, oder dass die Einlagen als Spiralen ausgebildet sind.

Bei einem in eine Sacklochbohrung eingesetzten Hartmetalteil kann die Ausgestaltung auch so ausgeführt sein, dass die Einlagen als Hülse mit Löchern ausgebildet ist.

Ein gleichmässiger Spannungsausgleich im gesamten Lötspalt lässt sich nach einer Ausgestaltung dadurch erreichen, dass die Einlagen aus nicht lötbaren Partikeln, Körnern oder dgl. besteht.

Als Lot hat sich Hartlot, vorzugsweise auf Silber- oder Kupferbasis, bewährt.

Die Erfindung wird anhand von verschiedenen, in den Zeichnungen dargestellten Ausführungsbeispielen näher erläutert. Es zeigt:

Fig. 1 eine teilweise geschnittene Seitenansicht eines Rundschaftmeissels,

Fig. 2 den Ausschnitt Z der Fig. 1 in vergrösserter Darstellung,

Fig. 3 den Ausschnitt Z eines dritten Ausführungsbeispiels eines Rundschaftmeissels,

Fig. 4 den Ausschnitt Z eines vierten Ausführungsbeispiels eines Rundschaftmeissels,

Fig. 5 den Ausschnitt Z eines fünften Ausführungsbeispiels eines Rundschaftmeissels,

Fig. 6 im Schnitt einen Ausschnitt aus einem weiteren Ausführungsbeispiel eines Rundschaftmeissels und

Fig. 7 im Schnitt ein Ausführungsbeispiel eines Drehmeissels.

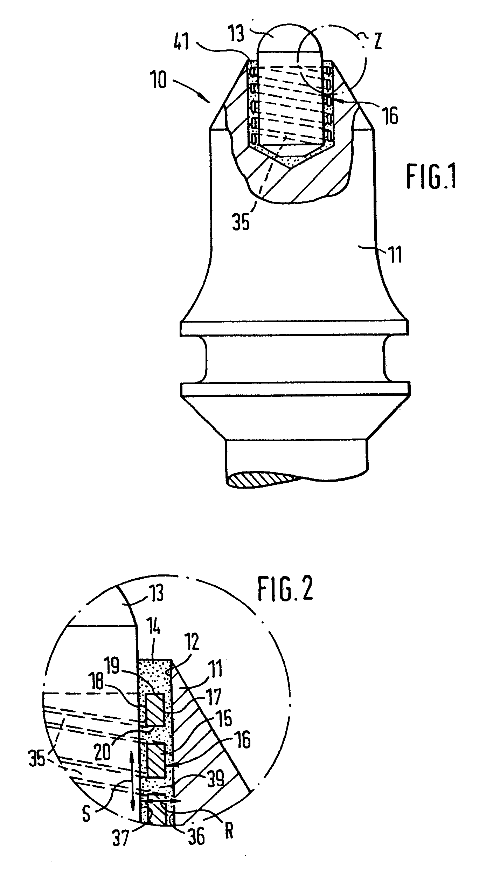

Der in den Fig. 1 und 2 dargestellte Rundschaftmeissel 10 weist einen rotationssymmetrischen Schaft auf, der am vorderen Stirnende eine als Sackloch ausgebildete Mittelbohrung 12 aufweist, in die das als Hartmetallspitze ausgebildete Hartmetallteil 13 mittels Lot 14 eingelötet ist. Das Lot 14 ist ein Hartlot auf Silber- und/oder Kupferbasis mit Schmelzpunkten von 700° bis 1100 °C. Der Schaft dient als Träger 11 des Werkzeuges. Das Hartmetallteil 13 ist in der Mittelbohrung 12 von einer Einlage 16 umfasst, die aus einer aus einem Band 15 schraubenlinienförmig gewickelten Spirale besteht, die sowohl axial, als auch radial dehn- und komprimierbar ist. Der Lötspalt 41 zwischen dem Hartmetallteil 13 und der Mittelbohrung 12 im Träger 11 ist mit Lot 14 ausgefüllt, so dass die Spirale eingebettet ist. Das Metallband 15 hat rechteckförmigen Querschnitt, wobei die grössere Abmessung parallel zur Längsmittelachse des Hartmetallteils 13 ausgerichtet ist. Die Spirale erstreckt sich 30% bis 80% der Tiefe der Mittelbohrung 12.

Die äussere und innere Breitseite 17 und 18 des Bandes 15 aus Metall tragen Oberflächenbeschichtungen, die sich nicht mit dem Lot 14 verbinden, so dass sich daran rissartige Unterbrechungen als Schwachstellen im Lötspalt 41 bilden. Dies kann durch Alitierung des Bandes 15 erreicht werden. Die Schmalseiten 19 und 20 des Bandes 15 verbinden sich mit dem Lot 14 nicht.

Treten an dem Träger 11 und dem Hartmetallteil 13 bei starker Erwärmung Spannungen auf, dann werden diese an diesen Schwachstellen so reduziert, dass keine Spannungsrisse im Hartmetallteil 13 mehr auftreten. Die Spannungen wirken radial, d.h. quer zum Lötspalt 41 als Zug oder Druck (Kraft R in Fig. 2) oder entlang dem Lötspalt 41 axial oder tangential als Schwerkraft S. Die Unterbrechungen in der Lotverbindung erlauben kleinste Verschiebungen, die ausreichen, diese Kräfte sehr stark zu reduzieren. Auch die Verformbarkeit der Spirale wirkt an diesem Spannungsausgleich mit. Der schraubenlinienförmige Spalt der Spirale bildet einen mittels der Lotbrücke 39 ausgefüllten Durchlass 35 von der Umfangswand 36 der Mittelbohrung 12 zu dem Umfang 37 des Hartmetallteils 13.

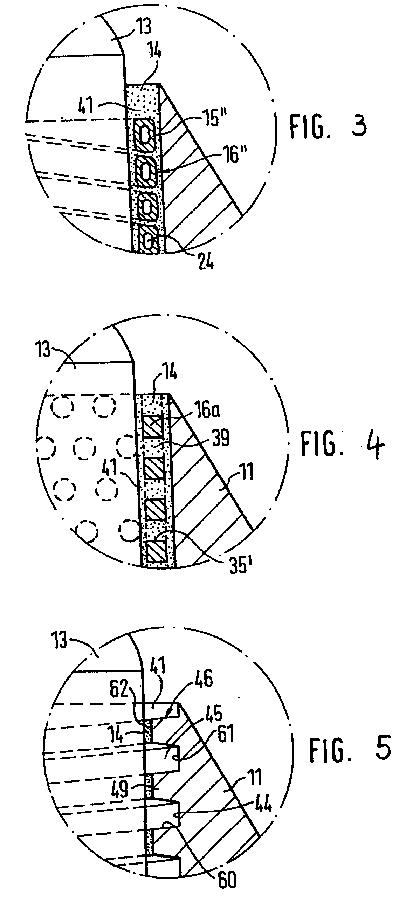

Bei dem Ausführungsbeispiel eines Rundschaftmeissels nach Fig. 3, von dem ebenfalls nur der Ausschnitt Z nach Fig. 1 gezeigt ist, ist die Einlage 16″ eine aus einem Metallrohr 15″ gebildete Spirale, die an beiden Enden verschlossen ist. Der Hohlraum 24 der Spirale schafft eine volumenändernde Einlage 16″, die dehnbar und komprimierbar ist. Die dem Lot 14 zugekehrten Flächen der Spirale können sich vollständig mit dem Lot 14 verbinden, da die Spirale in sich die Spannungen ausgleichen kann. Die verschlossenen Enden der Spirale verhindern ein Eintreten des Lots 14 in den Hohlraum 24, der sich schraubenlinienförmig um den Hartmetallteil 13 legt. Das Metallrohr 15″ ist ein Flachrohr, dessen grössere Abmessung wieder parallel zur Mittellängsachse des Hartmetallteils 13 ausgerichtet ist.

Bei dem Ausführungsbeispiel nach Fig. 4 ist die Einlage 16a als Topf ausgebildet, der im Boden und in der Topfwand perforiert ist. Die Innen- und die Aussenfläche des Topfes ist mit einer nicht lötbaren Beschichtung versehen. Das Lot 14 dringt durch die Löcher 35′ des Topfes und bildet Lötbrücken 39 und kann sich durchaus mit den Lochwänden verbinden. Der Lötspalt 41 kann durch die Einlage 16a wieder Spannungen ausgleichen, da die nicht verlöteten Flächen des Topfes im Lötspalt 41 Unterbrechungen bilden, während die Lötbrücken 39 einen ausreichenden Halt des Hartmetallteils 13 in dem Träger 11 sicherstellen.

Bei dem Rundschaftmeissel 10 nach Fig. 5 ist der Träger 11 aus Stahl und das flüssige Lot 14 benetzt die Flächen von Träger 11 und Hartmetallteil 13. In den Träger 11 ist das Gewinde 46 mit dem Gewinderücken 49 und der Vertiefungen bildenden Nut 44 eingeschnitten. Zwischen den schraubenlinienförmigen Gewinderücken 49 und dem Hartmetallteil 13 bildet sich eine sehr schmaler schraubenlinienförmiger Spalt 62, in welchem beim Löten das flüssige Lot 14 durch Kapillarwirkung bis zum oberen Ende des Gewindes 46 hochsteigt. Die Gewindeflanken 60 und der Gewindeboden 61 werden nicht mit dem Lot 14 benetzt, so dass ein nach oben offener schraubenlinienförmiger Hohlraum 45 im Lötspalt 41 entsteht, der bis zum ebenen Boden der Mittelbohrung 12 verläuft. Der Boden der Mittelbohrung 12 ist vollständig mit Lot 14 bedeckt. Die Gewindeform kann rechteckförmig, trapezförmig oder abgerundet sein. Der Hohlraum 45 bildet die vorbestimmte Schwachstelle für den Spannungsausgleich.

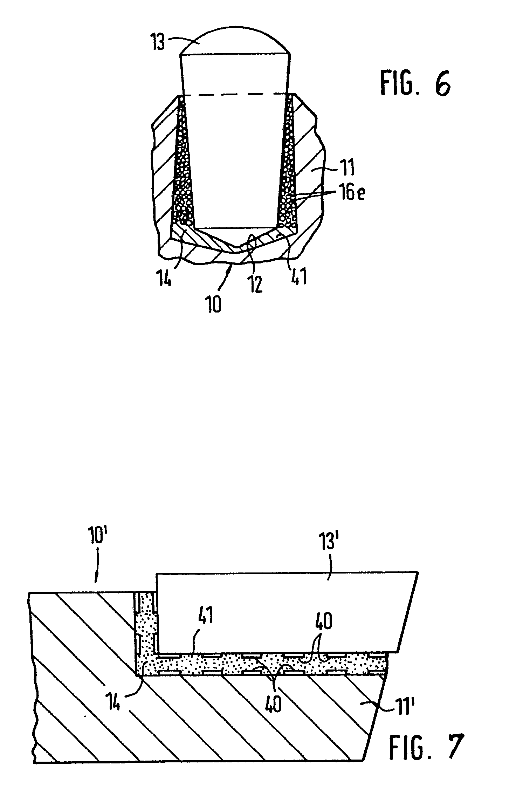

Bei dem Meissel nach Fig. 6 ist die Mittelbohrung 12 bikonisch, die sich zunächst konisch erweitert und dann wieder konisch verjüngt. Das Hartmetallteil 13 ist als Stift ausgebildet und ebenfalls entsprechend bikonisch, damit der Lötspalt 41 entsteht.

Die Einlagen 16e sind hier Partikel oder Körner, die vorzugsweise ein geringeres spezifisches Gewicht als das Lot 14 haben, elastischer als dieses und nicht mit dem Lot 14 verbindbar sind. Die Schmelztemperatur der Partikel ist höher als die Schmelztemperatur des Lotes 14, das als Pulver mit den Partikeln in den Lötspalt 41 eingebracht ist. Durch Erwärmen bis zum Schmelzpunkt des Lotes 14 werden die Partikel in das Lot 14 schwimmend eingebettet, da sie nicht aus der Engstelle am oberen Ende des Lötspaltes 41 austreten können. Die Partikel bilden selbst Schwachstellen im Lötspalt 41 und überdies Unterbrechungen zum angrenzenden Lot 14, so dass ein ausgezeichneter Spannungsausgleich erreicht wird.

Schliesslich zeigt Fig. 7 einen Drehmeissel 10′, bei dem mittels des Lötspaltes 41 das als Hartmetallplättchen ausgebildete Hartmetallteil 13′ mit dem Träger 11′ fest verbunden ist. Die Oberflächen des Hartmetallteils 13′ und des Trägers 11′ sind im Bereich des Lötspaltes 41 an vorbestimmten, verteilten Stellen mit sehr dünnen Beschichtungen 40 versehen, die sich nicht mit dem Lot 14 verbinden. Auf diese Weise entstehen eine Vielzahl, über den gesamten Lotspalt 41 gleichmässig oder ungleichmässig, verteilter Schwachstellen. Die Beschichtungen 40 können nur an dem Träger 11′ oder auch nur an dem Hartmetallteil 13′ vorgesehen sein. Als Beschichtung 40 hat sich Siliciumcarbid SiC, Aluminiumoxyd $Al_2O_3$ oder anderes Oxydkeramik bewährt, die mindestens 20% der Lötspaltwände bedeckt.

**Patentansprüche**

1. Werkzeug mit mindestens einem verschleissfesten, der Bearbeitung von Werkstücken, Gestein oder dgl. dienenden Hartmetallteil (13), das mit einem metallischen Träger (11) durch ein in mindestens einem Lötspalt (41) befindliches Lot (14) mit eingebetteten Einlagen (16, 16a, 16e) fest verbunden ist, dadurch gekennzeichnet, dass die Einlagen (16, 16a, 16e) mit einer beim Löten nicht mit dem Lot (14) verbindenden Oberflächenschicht (40) versehen sind.

2. Werkzeug mit mindestens einem verschliessfesten, der Bearbeitung von Werkstücken, Gestein oder dgl. dienenden Hartmetallteil (13), das mit einem metallischen Träger (11) durch ein in mindestens einem Lötspalt (41) befindlichen Lot (14) mit eingebetteten Einlagen (16″) fest verbunden ist, dadurch gekennzeichnet, dass die Einlagen (16″) hohl ausgebildet sind, wobei der Innenraum der Einlagen (16″) nicht mit dem Lot (14) verbunden ist.

3. Werkzeug mit mindestens einem verschleissfesten, der Bearbeitung von Werkstücken, Gestein oder dgl. dienenden Hartmetallteil (13; 13′), das mit einem metallischen Träger (11; 11′) durch ein in mindestens einem Lötspalt (41) befindlichen Lot (14) fest verbunden ist, dadurch gekennzeichnet, dass nur Teilbereiche der durch das Hartmetallteil (13; 13′) und den Träger (11; 11′) gebildeten Lötspaltwände unter Bildung von Hohlräumen (45) miteinander fest verbunden sind.

4. Werkzeug nach Anspruch 1 oder 2, dadurch gekennzeichnet, dass die Einlagen (16; 16″; 16a; 16e) volumen-veränderlich und elastischer als das Lot (14) sind.

5. Werkzeug nach Anspruch 1 oder 2, dadurch gekennzeichnet, dass die Einlagen (16; 16") als Spiralen ausgebildet sind.

6. Werkzeug nach Anspruch 1, dadurch gekennzeichnet, dass die Einlagen (16a) als Hülse mit Löchern (35') ausgebildet ist.

7. Werkzeug nach Anspruch 1, dadurch gekennzeichnet, dass die Einlagen (16e) aus nicht lötbaren Partikeln, Körner oder dgl. besteht.

8. Werkzeug nach einem der Ansprüche 1 bis 7, dadurch gekennzeichnet, dass das Lot (14) ein Hartlot, vorzugsweise auf Silber- oder Kupferbasis, ist.

## Revendications

1. Outil comportant au moins une partie (13) en métal dur, résistant bien à l'usure, servant à travailler des pièces à usiner, de la roche ou pierre ou une matière analogue et qui est fermement relié à un support (11) métallique par une soudure (14) se trouvant dans au moins une fente (41) et comportant des garnitures (16, 16a, 16e) noyées, outil caractérisé en ce que les garnitures (16, 16a, 16e) sont munies d'une couche de surface qui, lors du soudage, ne se lie pas à la matière de la soudure (14).

2. Outil comportant au moins une partie (13) en métal dur, résistant bien à l'usure, qui sert à travailler des pièces à usiner, de la pierre ou de la roche ou une matière analogue, et qui est fermement relié à un support (11) métallique par une soudure (14) se trouvant dans au moins une fente (41) et comportant des garnitures (16") noyées, outil caractérisé en ce que les garnitures (16") sont de forme creuse, de sorte que l'espace interne des garnitures (16") n'est pas lié à matière de la soudure (14).

3. Outil comportant au moins une partie (13; 13') en métal dur, résistant bien à l'usure, qui sert à travailler des pièces à usiner, de la pierre ou de la roche ou une matière analogue, et qui est fermement relié à un support (11; 11') métallique par une matière de soudure (14) se trouvant dans au moins une fente (41) emplie de cette soudure, outil caractérisé en ce que seules certaines zones des parois de la fente formée par la partie (13, 13') en métal dur et le support (11; 11') sont fermement reliées en formant ensemble des espaces creux (45).

4. Outil selon la revendication 1 ou 2, caractérisé en ce que les garnitures (16; 16"; 16a; 16e) peuvent subir une variation de volume et sont plus élastiques que la matière de la soudure (14).

5. Outil selon la revendication 1 ou 2, caractérisé en ce que les garnitures (16; 16") ont la forme de spirales.

6. Outil selon la revendication 1, caractérise en ce que la garniture (16a) a la forme d'uen douille ou d'un fourreau percé de trous (35").

7. Outil selon la revendication 1, caractérisé en ce que la garniture (16e) consiste en des particules, des grains ou des corpuscules analogues, non soudables.

8. Outil selon l'une des revendications 1 à 7, caractérisé en ce que la matière de la soudure (14) est une soudure dure, avantageusement à base d'argent ou de cuivre.

## Claims

1. Tool with at least one wear-resistant hard-metal portion (13) for machining workpieces, stone or the like, securely connected to a metal carrier (11) by means of a solder material (14) disposed in at least one soldering gap (41) and having embedded inserts (16, 16a, 16e), characterised in that the inserts (16, 16a, 16e) are provided with a surface layer (40) which does not connect with the solder (14) during soldering.

2. Tool with at least one wear-resistant hard-metal portion (13) for machining workpieces, stone or the like, securely connected to a metal carrier (11) by means of a solder (14) disposed in at least one soldering gap (41) and having embedded inserts (16"), characterised in that the inserts (16") are hollow, the interior of the inserts (16") not being connected to the solder (14).

3. Tool with at least one wear-resistant hard-metal portion (13; 13') for machining workpieces, stone or the like, securely connected to a metal carrier (11; 11') by means of a solder (14) disposed in at least one soldering gap (41), characterised in that only partial regions of the soldering gap walls, formed by the hard-metal portion (13; 13') and the carrier (11; 11') are fixedly interconnected to form cavities (45).

4. Tool according to claim 1 or 2, characterised in that the inserts (16; 16"; 16a; 16e) vary in respect of volume and are more resilient than the solder (14).

5. Tool according to claim 1 or 2, characterised in that the inserts (16; 16") are in the form of spirals.

6. Tool according to claim 1, characterised in that the inserts (16a) are in the form of a sleeve provided with holes (35').

7. Tool according to claim 1, characterised in that the inserts (16e) are formed from non-solderable particles, granules or the like.

8. Tool according to one of claims 1 to 7, characterised in that the solder (14) is a hard solder, preferably based on silver or copper.

FIG.1

FIG.2

FIG. 3

FIG. 4

FIG. 5

FIG. 6

FIG. 7